# EUROPEAN PATENT APPLICATION

(11) **EP 4 159 040 A1**
(43) Date of publication of application: **05.04.2023**
(21) Application number: 21812148.1
(22) Date of filing: 14.05.2021
(51) Int. Cl.: A21C 11/16, A23P 30/25

(54) **TRANSFER DEVICE FOR FOOD MATERIAL**

(30) Priority: 29.05.2020 JP 2020093843
(71) Applicant: Rheon Automatic Machinery Co., Ltd., Utsunomiya-shi, Tochigi 320-0071 (JP)
(72) Inventor: OKUBO, Hirofumi, Utsunomiya-shi, Tochigi 320-0071 (JP)
(74) Representative: Dehns
(86) International application number: PCT/JP2021/018392
(87) International publication number: WO 2021/241273

(57) **Abstract**

An object of the present invention is to provide a transfer device capable of stably transferring a food material transferred by a pump device in accordance with the physical properties of the food material. A transfer device (3,5), wherein a pump device (17) includes a housing unit (31) in which a pump chamber (36) in which a pair of Roots-type rotors (32A, 32B) are disposed and a downstream channel (37) communicating with the pump chamber are formed, and a pump driving unit (39) that drives the pair of Roots-type rotors to rotate in mutually opposite directions, the housing unit includes a casing (34) that houses the pair of Roots-type rotors, and the pair of Roots-type rotors have lobes (32AP, 32BP) each having a V-shaped profile and being meshable with each other, and are attached to the casing interchangeably left and right.

## Description

### Technical Field

The present invention relates to a device that transfers a food material such as cookie dough or cream.

### Background Art

An apparatus disclosed in Patent Literature 1 is an encrusting machine, and includes screw-transferring devices that transfer a filling material and an outer skin material, which are food materials, and pump devices that feed the filling material and the outer skin material transferred from the screw-transferring devices to a combining nozzle. Each screw-transferring device includes horizontal screws. A vane pump mechanism is used as each pump device, and each vane pump has a vertical rotating shaft.

An apparatus disclosed in Patent Literature 2 is an encrusting machine including a plurality of extrusion nozzles, and includes a pair of grooved rotors that transfer a filling material and an outer skin material, which are food materials, and pump devices that feed the filling material and the outer skin material transferred from the grooved rotors to a combining nozzle. A cycloid pump mechanism is used as each pump device, and each pump device includes, inside a pump chamber, a pair of Roots-type rotors meshed with each other. Each Roots-type rotor forms a profile that twists in one direction.

A device disclosed in Patent Literature 3 is a transfer device for a food material, and includes a screw-transferring device that transfers a food material, and a pump device that feeds the food material transferred from the screw-transferring device to a pipe. The screw-transferring device includes a vertical screw. A Roots pump is used as the pump device, and the pump device includes, inside a pump chamber, a pair of Roots-type rotors meshed with each other. Each Roots-type rotor has a vertical rotating shaft. Also, each Roots-type rotor forms a profile in the longitudinal direction.

The apparatuses and device disclosed in Patent Literatures 1 to 3 have a problem in that, for example, in transferring chocolate chip cookie dough, chocolate chip granules accumulate on a wall surface of a channel inside the pump device and cannot be transferred stably.

Furthermore, there is a problem in that, in shaping an encrusted product such as Mame Daifuku Mochi (bean soft rice cake filled with sweet bean paste), beans are buried inside rice cake dough, which is an outer skin material of the product, and difficult to see from the surface of the product, which reduces the value of the product.

Thus, it is an object of the present invention to provide a transfer device capable of stably transferring a food material transferred by a pump device in accordance with the physical properties of the food material.

### Citation List

### Patent Literature

Patent Literature 1: Japanese Patent Laid-Open Publication No. 2001-352960
Patent Literature 2: Japanese Patent Laid-Open Publication No. 2012-016344
Patent Literature 3: Taiwanese Utility Model Publication No. M517017

### Summary of Invention

The present invention has been made in view of the problems as described above and provides a transfer device that transfers a food material, the transfer device including: a screw device; and a pump device that feeds out a food material transferred by the screw device. The pump device includes a housing unit in which a pump chamber in which a pair of Roots-type rotors are disposed and a downstream channel communicating with the pump chamber are formed. The pump device also includes a pump driving unit that drives the pair of Roots-type rotors to rotate in mutually opposite directions,. The pump device receives the food material in a direction following a direction in which the food material is transferred by the screw device. The housing unit includes a casing that houses the pair of Roots-type rotors. The pair of Roots-type rotors have lobes each having a V-shaped profile, the lobes being meshable with each other, and are attached to the casing interchangeably left and right.

For example, the housing unit includes the casing that rotatably supports one end of a rotating shaft of each of the pair of Roots-type rotors, and a lid that rotatably supports the other end of the rotating shaft of each of the pair of Roots-type rotors and is fitted with the casing.

For example, the pump chamber is defined by the casing having a bottom face facing one end face of each of the Roots-type rotors and arc-shaped side faces each surrounding a part of an outer locus of a corresponding one of the Roots-type rotors rotating, and by the lid facing the other end face of each of the Roots-type rotors.

For example, the arc-shaped side face is formed in an area at least covering adjacent lobes of the Roots-type rotor.

For example, an outlet of the pump chamber is narrower than an inlet of the pump chamber.

For example, the downstream channel includes an inlet channel communicating with an outlet of the pump chamber, a connecting channel communicating with the inlet channel, and an outlet channel communicating with the connecting channel. The inlet channel and the outlet channel are disposed in a bent manner so that a direction in which the food material flows downstream inside the inlet channel differs from a direction in which the food material flows downstream inside the outlet channel.

For example, each of the Roots-type rotors has two or more and eight or less lobes.

For example, an upstream channel that receives the food material transferred from the screw device is formed in the housing unit. The upstream channel is connected to an outlet for the food material of the screw device and communicates with an inlet of the pump chamber.

For example, the screw device includes a horizontal screw. Each of the Roots-type rotors of the pump device has a vertical rotating shaft.

For example, the horizontal screw includes two parallel screws. A distance between rotation center axes of the screws is larger than a distance between rotation center axes of the Roots-type rotors.

For example, the screw device includes a vertical screw. Each of the Roots-type rotors of the pump device has a vertical rotating shaft.

For example, the pump device includes, on a base on which the screw device is mounted, the pump driving unit that drives the Roots-type rotors to rotate. The housing unit is detachably attached to the screw device and the pump driving unit.

For example, a food shaping apparatus includes: a first transfer device that transfers a first food material to a combining nozzle; a second transfer device that transfers a second food material to the combining nozzle; and the combining nozzle that combines the first food material and the second food material, in which the first transfer device and/or the second transfer device is the transfer device described above.

For example, a food shaping apparatus includes: a plurality of transfer devices that transfer a plurality of kinds of food materials to a combining nozzle; and the combining nozzle that combines the plurality of kinds of food materials transferred from the transfer devices, in which at least one of the plurality of the transfer devices is the transfer device described above.

For example, the food shaping apparatus further includes: a cutting device that is provided below the combining nozzle and cuts bar-shaped food dough ejected from the combining nozzle into food pieces; and a conveyance device that is provided below the cutting device and conveys the food pieces.

According to the present invention, the transfer device includes the screw device, and the pump device that feeds out a food material transferred by the screw device, the pump device receives the food material in the direction following the direction in which the food material is transferred by the screw device, the housing unit includes the pair of Roots-type rotors, and the pair of Roots-type rotors have the lobes each having a V-shaped profile, the lobes being meshable with each other, and are attached interchangeably left and right.

Thus, it is possible to stably transfer a food material from the transfer device in accordance with the physical properties of the food material.

This application is based on Patent Application No. 2020-093843 filed on May 29, 2020 in Japan, the disclosure of which is incorporated into the present application as part thereof.

The present invention will become more fully understood from the detailed description given below. However, the detailed description and the specific exemplary embodiments are only illustrations of desired embodiments of the present invention and are described only for the purpose of explanation. Various changes and modifications will be apparent to those skilled in the art on the basis of the detailed description.

The applicant has no intention to give to the public any disclosed embodiments. Among the disclosed modifications and alternatives, those which may not literally fall within the scope of the patent claims constitute a part of the invention in the sense of doctrine of equivalents.

The use of nouns and similar demonstratives in the present specification and claims is to be construed to cover both the singular and the plural, unless otherwise indicated herein or clearly contradicted by the context. The use of any and all examples, or exemplary language (e.g., "such as") provided herein is intended merely to better illuminate the invention, and does not pose a limitation on the scope of the invention unless otherwise claimed.

### Brief Description of Drawings

[Figure 1] Figure 1 is a front view schematically illustrating a food shaping apparatus 1 including a transfer device for a food material according to a first embodiment of the present invention.
[Figure 2] Figure 2 is a plan view schematically illustrating the food shaping apparatus 1 including the transfer device for a food material according to the first embodiment of the present invention.
[Figure 3] Figure 3 is a plan view schematically illustrating the transfer device for a food material according to the first embodiment of the present invention on a partial section taken along A-A of Figure 1.
[Figure 4] Figure 4 is a left side view schematically illustrating the transfer device for a food material according to the first embodiment of the present invention on a partial section taken along B-B of Figure 2.
[Figure 5] Figure 5 is a perspective view schematically illustrating Roots-type rotors included in the transfer device for a food material according to the first embodiment of the present invention viewed from obliquely above.
[Figure 6] Figure 6 is a plan view schematically illustrating a food shaping apparatus 1 including a transfer device for a food material according to a second embodiment of the present invention.
[Figure 7] Figure 7 is a left side view schematically illustrating the food shaping apparatus 1 including the transfer device for a food material according to the second embodiment of the present invention on a partial section taken along C-C of Figure 6.

### Description of Embodiments

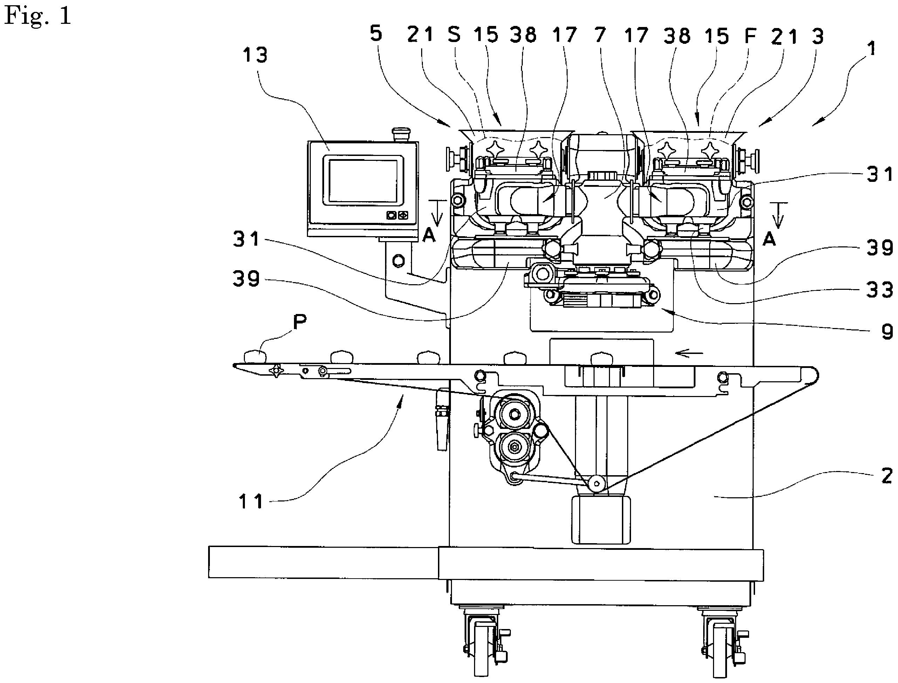

Hereinbelow, a food shaping apparatus 1 including a transfer device for a food material according to a first embodiment of the present invention will be described with reference to the drawings. As conceptually and schematically illustrated in Figures 1 to 5, the food shaping apparatus 1 includes a base 2 and includes, on the base 2, a filling material transfer device 3, an outer skin material transfer device 5, a combining nozzle 7, a cutting device 9, a conveyance device 11, and a control device 13 that controls driving of each part. Description will be made assuming that the food shaping apparatus 1 is, for example, an encrusting machine, and ejects bar-shaped food dough D including a filling material F, which is a food material, covered with an outer skin material S, which is a food material, from the combining nozzle 7, cuts the bar-shaped food dough D into food pieces P using the cutting device 9, and conveys the food pieces P to the next process using the conveyance device 11.

In the front view illustrated in Figure 1, the filling material transfer device 3 is disposed on the upper right side of the base 2, and the outer skin material transfer device 5 is disposed on the upper left side of the base 2. The combining nozzle 7 is detachably mounted between the filling material transfer device 3 and the outer skin material transfer device 5 on the front side of the base 2 (the front side of the paper in Figure 1). The cutting device 9 is configured to move up and down below the combining nozzle 7 and detachably provided on the base 2. The conveyance device 11 is a conveyor belt provided below the cutting device 9.

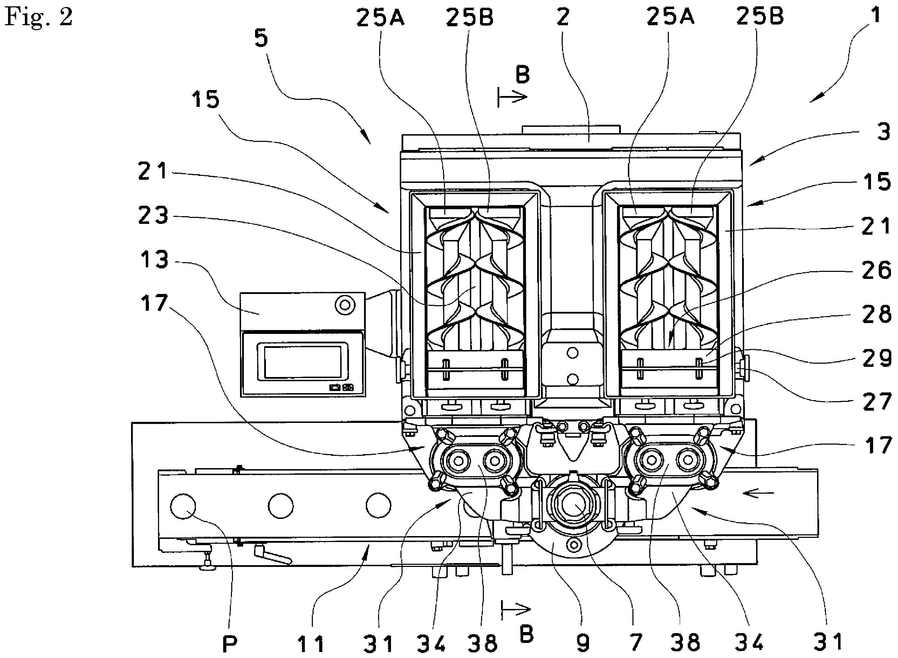

In the plane view illustrated in Figure 2, the filling material transfer device 3 and the outer skin material transfer device 5 are provided substantially left-right symmetrically. Here, the outer skin material transfer device 5 will be described, and constituent parts having the same functions between the outer skin material transfer device 5 and the filling material transfer device 3 are designated by the same reference signs to omit redundant description for the filling material transfer device 3.

The outer skin material transfer device 5 includes a screw device 15 for transferring the outer skin material S (food material) stored in a hopper 21, and a pump device 17 for transferring the outer skin material S transferred by the screw device 15 to the combining nozzle 7.

The screw device 15 includes a pair of screws 25A and 25B on left and right sides inside a screw housing 23 at the bottom of the hopper 21 that stores the outer skin material S, and the screws 25A and 25B are horizontally disposed parallel to each other and configured to rotate in mutually opposite directions. Each of the screws 25A and 25B is interlockingly coupled to an appropriate control motor (not illustrated), such as a servo motor, mounted inside the base 2 through an appropriate rotation transmission mechanism (not illustrated), such as a gear train, a chain, or a belt.

The screw device 15 may include, inside the screw housing 23, a pushing-in device 26 above the tip parts of the pair of screws 25A and 25B. The pushing-in device 26 includes a horizontal rotating shaft 27 perpendicular to the rotation axis direction of each of the screws 25A and 25B, and a roller 28 is externally fitted on the rotating shaft 27. Also, the roller 28 has a pushing-in vane 29 that moves in the radial direction of the roller 28. With the rotation of the roller 28, the pushing-in vane 29 is guided by a guide 23A formed in the screw housing 23 to project and retract from the peripheral face of the roller 28. The rotating shaft 27 is interlockingly coupled to an appropriate control motor (not illustrated) mounted inside the base 2 through an appropriate rotation transmission mechanism (not illustrated). The pushing-in device 26 prevents the outer skin material S from remaining above the pair of screws 25A and 25B due to the bridge phenomenon. That is, the pushing-in vane 29 pushes in the outer skin material S toward the screws 25A and 25B.

The pump device 17 includes a housing unit 31 and a pump driving unit 39. The housing unit 31 includes respective pairs of Roots-type rotors 32A and 32B on left and right sides, respective pairs of rotating shafts 33 on each of which a corresponding one of the Roots-type rotors 32A and 32B is externally fitted, a casing 34 connected to an end of the screw housing 23, and a lid 38. Also, in the housing unit 31, an upstream channel 35 that receives the outer skin material S transferred from the screw device 15, a pump chamber 36 communicating with the upstream channel 35, and a downstream channel 37 communicating with the pump chamber 36 are formed. In other words, the upstream channel 35 and the downstream channel 37 are defined by the casing 34.

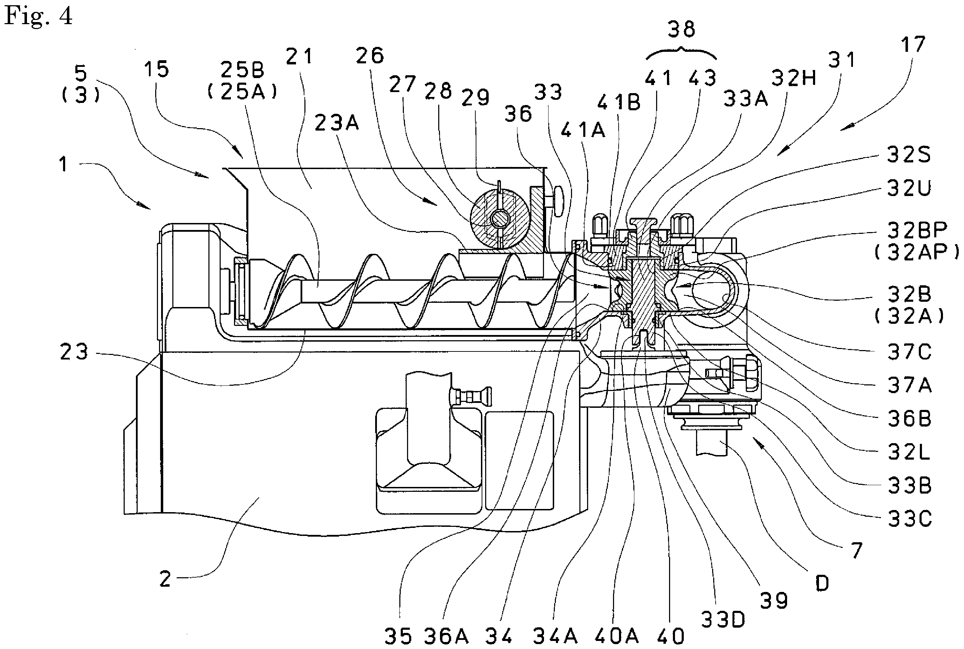

In a central part of the casing 34, which is a part between the upstream channel 35 and the downstream channel 37, the pair of rotating shafts 33 are vertically disposed parallel to each other. Also, the casing 34 has, in the central part thereof, a bottom face 34A facing a lower end face 32L of each of the Roots-type rotors 32A and 32B (the end face on the lower side in Figure 4), and left and right arc-shaped side faces 34B each surrounding a part of an outer locus of a corresponding one of the Roots-type rotors 32A and 32B rotating. Each of the arc-shaped side faces 34B is, in plan view, formed in an area (range) equal to or larger than an area covering a space between adjacent lobes 32AP (32BP) of the Roots-type rotor 32A (32B), which will be described further below.

Each of the rotating shafts 33 has a fitting shaft portion 33A that has a substantially rectangular parallelepiped shape and is fitted with the corresponding one of the Roots-type rotors 32A and 32B, a flange portion 33B supported by the casing 34, and a base end portion 33C. The base end portion 33C has a groove 33D that is projection-recess engaged with a driving shaft 40 of the pump driving unit 39, which will be described further below. The fitting shaft portion 33A of the rotating shaft 33 is formed in a substantially square shape in plan view.

Each of the Roots-type rotors 32A and 32B has a shaft portion 32S projecting in the axial direction from an upper end face 32U (the end face on the upper side in Figure 4). Each of the Roots-type rotors 32A and 32B has a fitting hole 32H fitted with the fitting shaft portion 33A of the rotating shaft 33. The hole shape of the fitting hole 32H is substantially square shape in plan view. On the outer periphery of the Roots-type rotor 32A, four lobes 32AP each forming a V-shaped profile are provided. Also, on the outer periphery of the Roots-type rotor 32B, four lobes 32BP each forming a V-shaped profile are provided. The lobes 32BP are formed in a V shape in an inverted orientation relative to the V shape of the lobes 32AP. The Roots-type rotors 32A and 32B are formed in, for example, a double helical shape by twisting each lobe formed in a cycloid curve in the axial direction.

Here, the lobes 32AP and 32BP having a V-shaped profile means that a projecting part of each of the lobes 32AP and 32BP has a V shape when each of the Roots-type rotors 32A and 32B is developed on the circumference of a circle concentric with the fitting shaft portion 33A. In the developed state, an open angle of a bend 322 in the V shape is preferably 60 to 120° because the pair of Roots-type rotors 32A and 32B can be easily meshed with each other. Although each lobe may include a plurality of V shapes stacked in the up-down direction, one large V shape is more preferable than a plurality of stacked fine V shapes in a case where a food material having a strong property, especially, high viscosity is transferred because effects described further below are likely to be achieved.

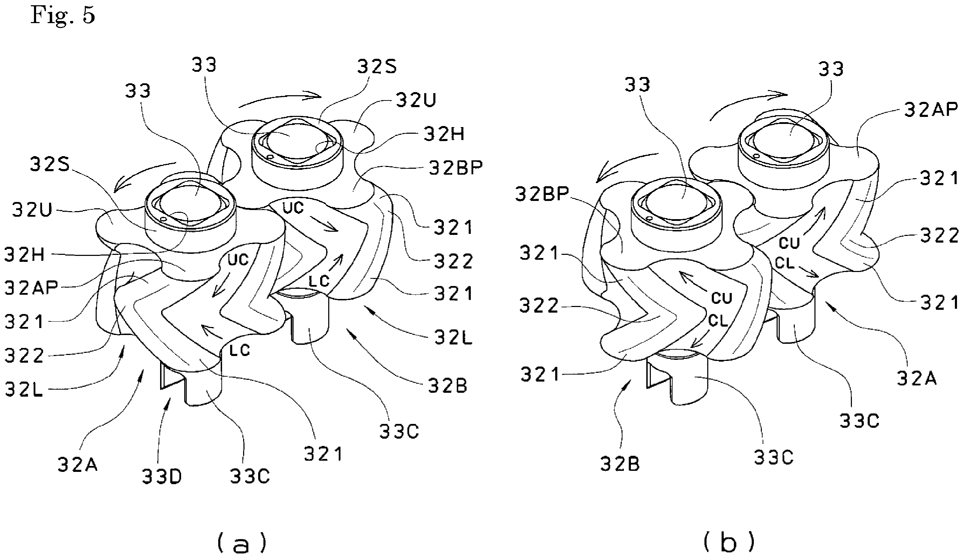

In plan view, the Roots-type rotor 32A and the Roots-type rotor 32B are meshed with each other and synchronously rotate outward relative to each other. That is, the Roots-type rotor 32A located on the left rotates leftward (rotates counterclockwise), and the Roots-type rotor 32B located on the right rotates rightward (rotates clockwise). At this time, as illustrated in Figure 5(a), in each lobe 32AP, upper and lower tips 321 of the profile move ahead of the bend 322 in the V shape in the leftward rotation. On the other hand, in each lobe 32BP, upper and lower tips 321 of the profile move ahead of the bend 322 in the V shape in the rightward rotation.

The lid 38 includes a lid member 41, and two bearings 43 fitted with the lid member 41. The lid member 41 has a plate-like shape, and has a fitting portion 41A fitted with the arc-shaped side face 34B of the casing 34 and a flange portion 41B having a larger diameter than the fitting portion 41A. When the lid 38 is attached to the casing 34 that houses the Roots-type rotors 32A and 32B with a known fixing tool such as a screw, the shaft portions 32S of the Roots-type rotors 32A and 32B are fitted with the two bearings 43 and rotatably supported. Here, description will be made assuming that the lid 38 supports the upper ends (the ends on the upper side in Figure 4) of the rotating shafts 33 of the Roots-type rotors 32A and 32B. Also, the lower face of the lid 38 faces the end faces 32U of the Roots-type rotors 32A and 32B.

As described above, the outer shape of the pump chamber 36 is defined by the casing 34 having the bottom face 34A facing the lower end faces 32L of the pair of Roots-type rotors 32A and 32B and the arc-shaped side faces 34B each surrounding a part of the outer locus of the corresponding one of the Roots-type rotors 32A and 32B rotating, and the lid 38 facing the upper end faces 32U of the Roots-type rotors 32A and 32B. In the present embodiment, the distance between the rotation center axes of the Roots-type rotors 32A and 32B is smaller than the distance between the rotation center axes of the screws 25A and 25B.

The upstream channel 35 is a channel for the outer skin material S (food material) extending from an outlet of the screw housing 23 of the screw device 15 to an inlet 36A of the pump chamber 36, and the outer skin material S (food material) transferred by the screw device 15 is transferred in the same direction through the upstream channel 35. That is, the pump device 17 receives the outer skin material S (food material) transferred by the screw device 15 in the same direction. The channel is gradually narrowed. Since the outer skin material S (food material) is transferred in the same direction as transferred by the screw device 15, and the channel is narrowed, the outer skin material S (food material) is stably fed to the pump chamber 36. Note that, although the transfer direction in the upstream channel 35, that is, the direction in which the outer skin material S (food material) is fed by the pump device 17, does not have to be the same as the direction in which the outer skin material S (food material) is transferred by the screw device 15, the outer skin material S (food material) is stably fed to the pump chamber 36 when transferred in a direction following the direction in which the outer skin material S (food material) is transferred by the screw device 15. Here, the direction following the direction of the transfer by the screw device 15 is a direction having the same vector component as the direction of the transfer by the screw device 15, and a direction less than a right angle, preferably an angular direction of 60° or less, and more preferably 45° or less.

The downstream channel 37 is bent in an elbow shape in the horizontal direction. The downstream channel 37 includes an inlet channel 37A communicating with an outlet 36B of the pump chamber 36, a connecting channel 37B communicating with the inlet channel 37A, and an outlet channel 37C communicating with the connecting channel 37B, and the inlet channel 37A and the outlet channel 37C are disposed in a bent manner so that a direction R1 in which the outer skin material S (food material) flows downstream inside the inlet channel 37A differs from a direction R2 in which the outer skin material S (food material) flows downstream inside the outlet channel 37C. The bent channels achieve the effect of stabilizing the flow of the outer skin material S (food material). Also, a connecting pipe 45 for connection with the combining nozzle 7 is detachably fitted with the outlet channel 37C. The connecting pipe 45 is a tubular member, and the outer skin material S (food material) pushed out from the pump chamber 36 is transferred to the combining nozzle 7 through the connecting pipe 45.

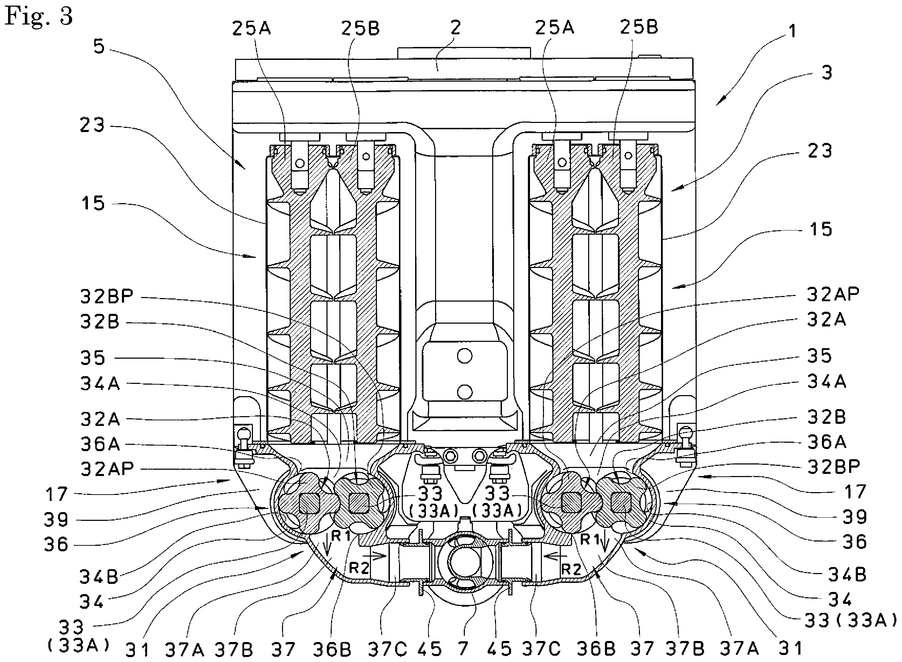

The inlet 36A and the outlet 36B of the pump chamber 36 are formed in substantially rectangular shapes having different sizes in front view. As illustrated in Figure 4, the height of the inlet 36A and the outlet 36B is the same as the height of the lobes 32AP and 32BP of the Roots-type rotors 32A and 32B. Also, as illustrated in Figure 3, the width of the inlet 36A is larger than the width of the outlet 36B. Thus, the outlet 36B is narrower than the inlet 36A. When the outlet 36B is narrower than the inlet 36A, the flow of the outer skin material S (food material) inside the pump chamber 36 can be stabilized. The housing unit 31 configured in this manner is detachably attached, on the base 2, to the screw device 15, the pump driving unit 39, and the combining nozzle 7 with a known fixing tool such as a screw.

The pump driving unit 39 includes, on the base 2, two driving shafts 40 coupled to the two rotating shafts 33 of the pump device 17. The driving shafts 40 are interlockingly coupled to an appropriate control motor (not illustrated) mounted inside the base 2 through an appropriate rotation transmission mechanism (not illustrated) and synchronously rotate in opposite directions. Each of the driving shafts 40 is disposed with its upper portion projecting from the upper face of the base 2 and has parallel D-chamfers 40A on an end thereof. The groove 33D of each of the rotating shafts 33 is engaged with the D-chamfers 40A.

Next, transfer of the outer skin material S in the housing unit 31 will be described. The outer skin material S is pushed out from the outlet of the screw housing 23 of the screw device 15 and transferred in the horizontal direction to the inlet 36A of the pump chamber 36 through the upstream channel 35. As indicated by arrows UC and LC of Figure 5(a), with the rotations of the left and right Roots-type rotors 32A and 32B, the outer skin material S (food material) receives thrust from the upper and lower ends of each of the Roots-type rotors 32A and 32B toward the central side in the axial direction, from a ridgeline of the V-shaped profile (the line connecting portions having the maximum radius) toward a groove (toward an intermediate portion between the adjacent lobes 32AP, 32BP). Thus, since the outer skin material S (food material) moves toward the central side, if solids are mixed in the food material, the solids also move toward the central side in the same manner and thus tend to be distributed to the central side in the axial direction (vertical direction) of each of the Roots-type rotors 32A and 32B.

The outer skin material S is further transferred inside the pump chamber 36 along the left and right arc-shaped side faces 34B and pushed out to the downstream channel 37 by the left and right lobes 32AP and 32BP meshed with each other. The meshed position sequentially moves from the top and bottom of each of the left and right lobes 32AP and 32BP toward the central side thereof in the axial direction. Thus, the pushing-out of the outer skin material S in each lobe starts at the upper and lower ends of each of the left and right lobes 32AP and 32BP and ends at the center thereof. Thus, the outer skin material S (food material) inside the groove is pushed out from the central side of the lobes 32AP and 32BP in the axial direction and moves toward the central side of the cross section of the downstream channel 37. Also, since the upper and lower ends of each of the left and right lobes 32AP and 32BP pass through the outlet 36B of the pump chamber 36 ahead of the bend 322 on the center, the left and right lobes 32AP and 32BP move in such a manner as to gradually close the outlet 36B from its upper and lower corners to downsize the channel to which the outer skin material S is pushed out. The operation of downsizing the channel is alternately repeated on left and right in response to the rotations of the left and right lobes 32AP and 32BP. Accordingly, the outer skin material S tends to flow more (faster) through the center of the downstream channel 37 than the vicinity of the inner wall surface thereof. When the food material is, for example, chocolate chip cookie dough, adhesion of chocolate chips (granules) included in the outer skin material S to the inner wall of the downstream channel 37 is reduced.

The filling material transfer device 3 is configured in a manner similar to the outer skin transfer device 5 and formed substantially left-right symmetrically. A housing unit 31 of the filling material transfer device 3 is detachably attached, on the base 2, to a screw device 15 for the filling material, a pump driving unit 39 for the filling material, and the combining nozzle 7.

While the food shaping apparatus 1 including the transfer device for a food material according to the first embodiment of the present invention is generally as described above, the present invention is not limited thereto and various changes can be made within the scope of the claims. While each of the Roots-type rotors 32A and 32B has four lobes in the above description, the number of lobes may be two or more, and each arc-shaped side face 34B of the casing 34 may be appropriately changed to have an area equal to or larger than an area covering the adjacent lobes. While the number of lobes varies depending on the properties of a food material, the speed of manufacturing a product, or the like, the number of lobes is preferably two or more and eight or less, and more preferably two or more and six or less. If the number of lobes is too large, the inclination angle from the ridgeline of the V-shaped profile to the groove is close to a direction parallel to the axial direction, the effect brought about by the V shape as described above is thus reduced.

Also, as illustrated in Figure 5(b), the pair of Roots-type rotors 32A and 32B combined may be interchanged left and right and housed in the casing 34. In each lobe 32BP of the Roots-type rotor 32B, the bend 322 in the V shape moves ahead of the upper and lower tips 321 of the profile in leftward rotation. On the other hand, in each lobe 32AP of the Roots-type rotor 32A, the bend 322 in the V shape moves ahead of the upper and lower tips 321 of the profile in rightward rotation. Note that the interchange of the left and right Roots-type rotors 32A and 32B can also be performed together with the rotating shafts 33.

As indicated by arrows CU and CL in Figure 5(b), with the rotations of the left and right Roots-type rotors 32B and 32A, the outer skin material S (food material) transferred to the pump chamber 36 through the upstream channel 35 receives thrust from the center of each of the Roots-type rotors 32A and 32B to the top and bottom thereof in the axial direction, from the ridgeline of the V-shaped profile toward the groove. At this time, an action such as moving the outer skin material S (food material) up and down from the center is performed. Accordingly, the food material tends to be distributed to the top and bottom of each of the Roots-type rotors 32A and 32B in the axial direction.

The outer skin material S is further transferred inside the pump chamber 36 along the left and right arc-shaped side faces 34B and reaches the outlet 36B. The outer skin material S is pushed out to the downstream channel 37 by the left and right lobes 32BP and 32AP meshed with each other. The meshed position sequentially moves from the center of each of the left and right lobes 32BP and 32AP toward the top and bottom thereof in the axial direction. Thus, the pushing-out of the outer skin material S in each lobe starts at the center of each of the left and right lobes 32BP and 32AP and ends at the upper and lower ends thereof. Accordingly, the outer skin material S (food material) tends to move up and down or around from the center of the downstream channel 37 and flow more (faster) through the vicinity of the inner wall surface of the downstream channel 37 than the center thereof. Thus, when the food material is, for example, Mame Daifuku Mochi dough, beans (granules) move to the vicinity of the surface.

When the food material is relatively hard, the pair of Roots-type rotors 32A and 32B are preferably disposed as illustrated in Figure 5(b). Compared to the disposition as illustrated in Figure 5(a), the outer skin material S is strongly pushed out toward the inner wall of the downstream channel 37 to increase the pressure inside the downstream channel 37, and stable transfer with less pulsation of the flow of the food material can be achieved. As a result, the weight of the food pieces P cut by the food shaping apparatus 1 is stabilized.

Also at the inlet 36A of the pump chamber 36, in the case of the disposition as illustrated in Figure 5(a), the food dough is cut at the bend 322. In the case of highly resilient dough (such as rice cake dough), the dough is returned by being pulled by the dough located on the upstream side, which results in an unfilled area. In the case of the disposition as illustrated in Figure 5(b), the food dough is cut at the tips 321. Thus, the return of the dough is less likely to occur, and stable transfer with less pulsation can be performed.

The food shaping apparatus 1 may include only one of the transfer devices 3 and 5, and the other transfer device may be, for example, a vane pump mechanism disclosed in Patent Literature 1.

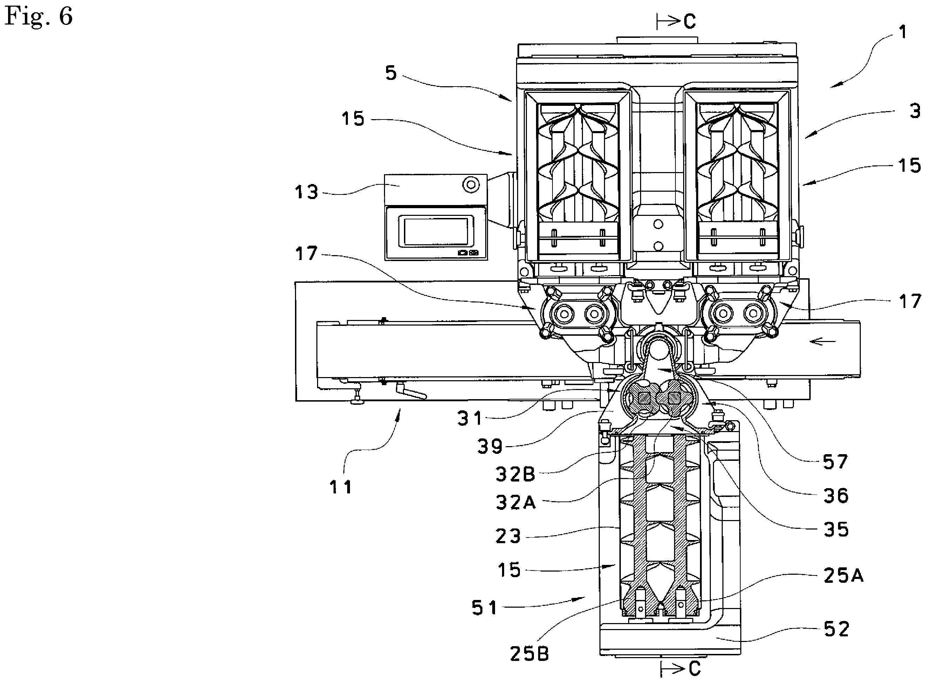

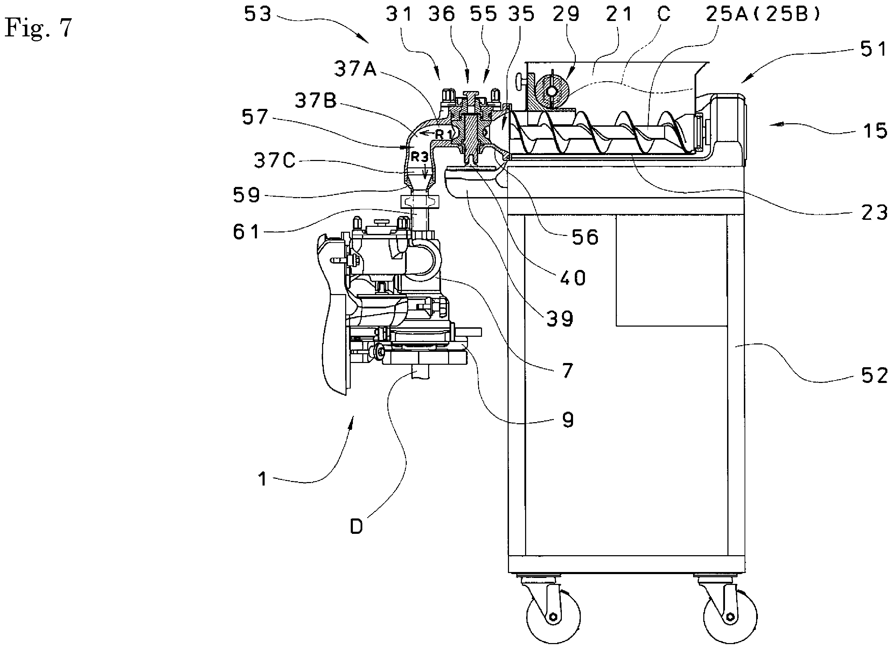

Next, a transfer device 51 for a food material according to a second embodiment of the present invention will be described. Note that constituent elements having functions similar to those in the transfer devices 3 and 5 for a food material according to the first embodiment are designated by the same reference signs as those in the first embodiment to omit detailed description thereof. As illustrated in Figures 6 and 7, the transfer device 51 is coupled to a food shaping apparatus 1. The food shaping apparatus 1 covers a center material C, which is a food material, transferred from the transfer device 51 with a filling material F, further covers the filling material F with an outer skin material S to combine them to form bar-shaped food dough D, ejects the bar-shaped food dough D from a combining nozzle 7, cuts the bar-shaped food dough D into food pieces P using a cutting device 9, and conveys the food pieces P to the next process using a conveyance device 11.

The transfer device 51 includes, on a base 52, a screw device 15 and a pump device 53. The pump device 53 includes a housing unit 55 and a pump driving unit 39. In the housing unit 55, an upstream channel 35 that receives the center material C transferred from the screw device 15, a pump chamber 36 communicating with the upstream channel 35, and a downstream channel 57 communicating with the pump chamber 36 are formed. In other words, the upstream channel 35 and the downstream channel 57 are defined by a casing 56.

The downstream channel 57 is bent in an elbow shape in the up-down direction. The downstream channel 57 includes an inlet channel 37A and an outlet channel 37C that are disposed in a bent manner so that a direction R1 in which the center material C (food material) flows downstream inside the inlet channel 37A differs from a direction R3 in which the center material C (food material) flows downstream inside the outlet channel 37C. Also, a connecting pipe 59 for connection with the combining nozzle 7 is screwed to an outlet of the outlet channel 37C. The connecting pipe 59 is coupled to a center cylinder 61 disposed in the up-down direction on the center of the combining nozzle 7. The transfer device 51 transfers the center material C to the combining nozzle 7.

As can be understood from the above description, in a food shaping apparatus including a plurality of transfer devices that transfer a plurality of kinds of food materials, at least one of the transfer devices can have the configuration according to the embodiments of the present invention, and various combinations can be made.

Also, while the plurality of kinds of food materials transferred from the plurality of transfer devices are stacked and combined by the combining nozzle 7 to eject the bar-shaped food dough D in the above description, for example, a nozzle may be connected to the housing unit 55 of the transfer device 51, and, in addition, the pair of Roots-type rotors may be intermittently driven to constitute an ejection device for a food material.

Also, while the pair of screws 25A and 25B are horizontally disposed parallel to each other in the above description, for example, a screw device including one screw that is vertically disposed and has a helical vane whose radius changes in an inverted conical shape may be used. Also, while the screw device 15 and the pump device 17 transfer the food material in the horizontal direction in the above description, the present invention is not limited thereto, and both or one of the devices may transfer the food material in an inclined direction or the vertical direction.

### Reference Signs List

- 1: food shaping apparatus (encrusting machine)
- 2: base
- 3: filling material transfer device
- 5: outer skin material transfer device
- 7: combining nozzle
- 9: cutting device
- 11: conveyance device
- 13: control device
- 15: screw device
- 17: pump device
- 31: housing unit
- 32A, 32B: Roots-type rotor
- 32AP, 32BP: lobe
- 321: tip (of profile)
- 322: bend (of profile)
- 33: rotating shaft
- 34: casing
- 34A: bottom face
- 34B: arc-shaped side face
- 35: upstream channel
- 36: pump chamber
- 36A: inlet
- 36B: outlet
- 37: downstream channel
- 37A: inlet channel
- 37B: connecting channel
- 37C: outlet channel
- 38: lid
- 39: pump driving unit
- 41: lid member
- 51: transfer device
- 52: base
- 53: pump device
- 55: housing unit
- 56: casing
- 57: downstream channel
- 61: center cylinder
- C: center material (food material)
- D: bar-shaped food
- F: filling material (food material)
- P: food piece
- S: outer skin material (food material)
- R1, R2, R3: direction (food material flow)
- UC, LC, CU, CL: arrow (food material flow)

## Claims

1. A transfer device that transfers a food material, the transfer device comprising: a screw device; and a pump device that feeds out a food material transferred by the screw device,
wherein the pump device includes a housing unit in which a pump chamber in which a pair of Roots-type rotors are disposed and a downstream channel communicating with the pump chamber are formed, and a pump driving unit that drives the pair of Roots-type rotors to rotate in mutually opposite directions, and receives the food material in a direction following a direction in which the food material is transferred by the screw device,
wherein the housing unit includes a casing that houses the pair of Roots-type rotors, and
wherein the pair of Roots-type rotors have lobes each having a V-shaped profile, the lobes being meshable with each other, and are attached to the casing interchangeably left and right.

2. The transfer device according to claim 1,
wherein the housing unit includes the casing that rotatably supports one end of a rotating shaft of each of the pair of Roots-type rotors, and a lid that rotatably supports the other end of the rotating shaft of each of the pair of Roots-type rotors and is fitted with the casing.

3. The transfer device according to claim 2,
wherein the pump chamber is defined by the casing having a bottom face facing one end face of each of the Roots-type rotors and arc-shaped side faces each surrounding a part of an outer locus of a corresponding one of the Roots-type rotors rotating, and by the lid facing the other end face of each of the Roots-type rotors.

4. The transfer device according to claim 3,
wherein the arc-shaped side face is formed in an area at least covering adjacent lobes of the Roots-type rotor.

5. The transfer device according to claim 3,
wherein an outlet of the pump chamber is narrower than an inlet of the pump chamber.

6. The transfer device according to claim 1,
wherein the downstream channel includes an inlet channel communicating with an outlet of the pump chamber, a connecting channel communicating with the inlet channel, and an outlet channel communicating with the connecting channel, and
wherein the inlet channel and the outlet channel are disposed in a bent manner so that a direction in which the food material flows downstream inside the inlet channel differs from a direction in which the food material flows downstream inside the outlet channel.

7. The transfer device according to claim 1,
wherein each of the Roots-type rotors has two or more and eight or less lobes.

8. The transfer device according to claim 1,
wherein an upstream channel that receives the food material transferred from the screw device is formed in the housing unit, and
wherein the upstream channel is connected to an outlet for the food material of the screw device and communicates with an inlet of the pump chamber.

9. The transfer device according to claim 1,
wherein the screw device includes a horizontal screw, and
wherein each of the Roots-type rotors of the pump device has a vertical rotating shaft.

10. The transfer device according to claim 9,
wherein the horizontal screw includes two parallel screws, and
wherein a distance between rotation center axes of the screws is larger than a distance between rotation center axes of the Roots-type rotors.

11. The transfer device according to claim 1,
wherein the screw device includes a vertical screw, and
wherein each of the Roots-type rotors of the pump device has a vertical rotating shaft.

12. The transfer device according to claim 1,
wherein the pump device includes, on a base on which the screw device is mounted, the pump driving unit that drives the Roots-type rotors to rotate, and
wherein the housing unit is detachably attached to the screw device and the pump driving unit.

13. A food shaping apparatus comprising:
a first transfer device that transfers a first food material to a combining nozzle;
a second transfer device that transfers a second food material to the combining nozzle; and
the combining nozzle that combines the first food material and the second food material, wherein
the first transfer device and/or the second transfer device is the transfer device according to any one of claims 1 to 12.

14. A food shaping apparatus comprising:
a plurality of transfer devices that transfer a plurality of kinds of food materials to a combining nozzle; and
the combining nozzle that combines the plurality of kinds of food materials transferred from the transfer devices, wherein
at least one of the plurality of the transfer devices is the transfer device according to any one of claims 1 to 12.

15. The food shaping apparatus according to claim 14, further comprising:
a cutting device that is provided below the combining nozzle and cuts bar-shaped food dough ejected from the combining nozzle into food pieces; and
a conveyance device that is provided below the cutting device and conveys the food pieces.
